(19) Europäisches Patentamt
European Patent Office
Office européen des brevets

(11) **EP 2 753 999 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **12738458.4**

(22) Anmeldetag: **25.07.2012**

(51) Int Cl.:
*G05D 23/19* *(2006.01)*  *F24D 19/10* *(2006.01)*
*G01K 17/10* *(2006.01)*  *F24F 11/00* *(2018.01)*

(86) Internationale Anmeldenummer:
**PCT/EP2012/064557**

(87) Internationale Veröffentlichungsnummer:
**WO 2013/034358 (14.03.2013 Gazette 2013/11)**

(54) **VERFAHREN ZUM BETREIBEN UND/ODER ÜBERWACHEN EINER HVAC-ANLAGE**

METHOD FOR OPERATING AND/OR MONITORING AN HVAC SYSTEM

PROCÉDÉ POUR FAIRE FONCTIONNER ET/OU SURVEILLER UNE INSTALLATION HVAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2011 CH 14582011**

(43) Veröffentlichungstag der Anmeldung:
**16.07.2014 Patentblatt 2014/29**

(73) Patentinhaber: **Belimo Holding AG**
**8340 Hinwil (CH)**

(72) Erfinder:
• **D'SILVA, Vinod**
**CH-8953 Dietikon (CH)**

• **NIGHTLINGER, Mark**
**Bellevue, WA 98008 (US)**
• **THUILLARD, Marc**
**CH-8707 Uetikon am See (CH)**
• **AEBERHARD, Ronald**
**8624 Grüt (CH)**

(74) Vertreter: **Rentsch Partner AG**
**Bellerivestrasse 203**
**Postfach**
**8034 Zürich (CH)**

(56) Entgegenhaltungen:
**EP-A1- 0 035 085  DE-A1- 2 216 464**
**US-A1- 2009 090 498**

EP 2 753 999 B1

**Beschreibung**

TECHNISCHES GEBIET

Die vorliegende Erfindung bezieht sich auf das Gebiet der Klimatechnik. Sie betrifft ein Verfahren zum Betreiben und/oder Überwachen einer HVAC-Anlage gemäss dem Oberbegriff des Anspruchs 1 sowie eine HVAC-Anlage zur Durchführung des Verfahrens. Der Begriff HVAC ist eine im angelsächsischen Sprachraum benutzte Abkürzung für Heating, Ventilation und Air Conditioning, mit der üblicherweise das klimatechnische Anwendungsgebiet bezeichnet wird.

STAND DER TECHNIK

In grösseren Gebäuden oder Gebäudekomplexen werden häufig HVAC-Anlagen eingesetzt, bei denen von einer zentralen Energieerzeugungs-Anlage aus Wärme- und/oder Kälteenergie über ein Energieträger-Medium in einem Primärkreislauf zirkulierend bereitgestellt wird, die dann im einzelnen Gebäuden oder Gebäudeteilen, meist über einen lokalen Wärmetauscher, geregelt entnommen und in einen Sekundärkreis übertragen und dort klimatechnisch zur Erwärmung und/oder Kühlung von einzelnen Räumen oder dgl. eingesetzt wird. Das Schema einer solchen Anlage ist beispielsweise in Fig. 3 der Druckschrift US 5,347,825 dargestellt.

Der an den jeweiligen Sekundärkreis abgegebene Energiefluss E (Energie pro Zeiteinheit oder Leistung) ergibt sich nach Massgabe der Gleichung $E=k \cdot \varphi \cdot \Delta T$, wobei k eine die spezifische Energie enthaltende Konstante ist, $\varphi$ den Volumenstrom des Energieträger-Mediums auf der Primärseite des Wärmetauschers bezeichnet, und $\Delta T$ die Temperaturdifferenz zwischen Vorlauftemperatur $T_V$ und Rücklauftemperatur $T_R$ auf der Primärseite des Wärmetauschers angibt. Die Temperaturdifferenz $\Delta T$ zeigt üblicherweise eine Abhängigkeit vom Volumenstrom $\varphi$ und sinkt zunehmendem Volumenstrom deutlich ab.

Bei der Regelung des Entnahmeprozesses am jeweiligen Wärmetauscher ist einerseits der Bedarf an Kälte- oder Wärmeenergie im zugehörigen Sekundärkreis zu berücksichtigen. Andererseits spielen Effizienzüberlegungen eine Rolle, d. h. es sollen Betriebsbedingungen vermieden werden, bei denen im Primärkreislauf mit grosser Pumpenleistung Medium umgepumpt wird, während an den jeweiligen Wärmetauschern bei kleinen Temperaturdifferenzen $\Delta T$ nur noch vergleichsweise wenig Energie entnommen wird, weil der Energiefluss E nicht linear mit den Volumenstrom $\varphi$ ansteigt, sondern mit steigendem Volumenstrom zunehmend abflacht.

Aus der DE 34 25 379 A1 ist ein Verfahren zur Regelung einer Wärmeübergabestation beschrieben, in der Wärme von einem Primärkreis über einen Wärmetauscher an einen Sekundärkreis übergeben wird, wobei zur Regelung der Vorlauftemperatur im Sekundärkreis ein witterungsabhängiger Sollwert für die Rücklauftemperatur im Primärkreis unter gleichzeitiger Berücksichtigung einer Maximaltemperatur ermittelt und zur Einstellung des durch den Wärmetauscher fliessenden primären Wärmestroms herangezogen wird. Als Führungsgrösse für die Sollwerteinstellung der primären Rücklauftemperatur wird die Temperatur des primären Vorlaufstroms gemessen und zusammen mit dem gemessenen Temperaturwert im primären Rücklaufstrom einem Regler zur Einstellung des Wärmestroms im Primärkreis in Verbindung mit einer Durchflussmessung zugeführt. Die Regelung des Wärmestroms im Primärkreis erfolgt dabei unter Berücksichtigung einer maximal begrenzten Rücklauftemperatur (Prinzip der Rücklauftemperaturbegrenzung).

Die Druckschrift EP 0 035 085 A1 offenbart eine Anlage zum Transport von Wärme mittels eines Fluides mit mindestens einer Wärmequelle, die über Leitungen mit mindestens einem Wärmeverbraucher verbunden ist, einem in die Leitungen eingeschalteten Ventil zum Einstellen der zu transportierenden Wärme, zwei Temperaturfühlern, von denen einer in eine das Fluid zum Wärmeverbraucher zuführende Leitung und einer in eine das Fluid vom Wärmeverbraucher wegführende Leitung eingeschaltet ist, einem in eine dieser Leitungen eingeschalteten Durchflussmesser und einem Gerät, das mit den Temperaturfühlern und dem Durchflussmesser verbunden ist und Mittel aufweist, um aus den gemessenen Temperaturen und Durchflüssen die transportierte Wärme zu bestimmen. Die Besonderheit besteht darin, dass das Gerät mit dem Ventil verbunden ist und Mittel aufweist, um das Ventil derart zu steuern, dass der Wärmefluss von der Wärmequelle zum Wärmeverbraucher unterbrochen wird, wenn der vom Durchflussmesser gemessene Durchfluss auf einen untern Grenzwert sinkt. Hiermit sollen zu grosse Fehler in der Bestimmung der verbrauchten Wärmemenge vermieden werden. Eine empirische Ermittlung der Abhängigkeit des Energieflusses und der Temperaturdifferenz vom Volumenstrom ist nicht offenbart.

Dieses Dokument DE 2 216 464 Al beschreibt eine Steuer- und Regeleinrichtung zur optimalen Erfassung der Wärmemengen mit Hilfe von Wärmezählern oder von Wärmemengenmessern nach dem Durchflussprinzip. Der Durchfluss und die Temperaturdifferenz zwischen Vor- und Rücklauf werden immer so gesteuert dass das Wärmemessgerät sowohl im Durchflussbereich als auch im Temperaturdifferenzbereich messtechnisch und verschleissmässig in seinem Optimalbereich arbeitet.

Die Druckschrift zeigt in Fig. 1 (c) zwar ein Diagramm, dass die Abhängigkeit der Temperaturdifferenz vom Durchfluss angibt, in der Beschreibung dazu (S. 10, Zeilen 4-7) heisst es jedoch explizit, dass bei der Aufstellung des Diagramms davon ausgegangen worden ist, dass der k-Wert der Heizkörper von der Temperatur und von der Temperaturdifferenz unabhängig sei. Dies macht deutlich, dass es sich nicht um ein empirisch ermitteltes Diagramm handelt.

Aus der Druckschrift US 6,352,106 B1 ist ein selbstausgleichendes modulierendes Regelventil für den Einsatz bei HVAC-Systemen mit einstellbarem Volumenstrom für die Versorgung von mehreren Energieverbrauchern bekannt, das beim jeweiligen Energieverbraucher eingesetzt die maximale Pumpleistung im Primärkreis bei allen Betriebsbedingungen zu verringern hilft. Das Ventil benötigt nur eine sehr geringe Druckdifferenz und arbeitet dennoch effektiv bei allen Verbrauchs- und Flussbedingungen. Wichtiger Bestandteil ist die Vorgabe eines Grenzwertes für eine am Verbraucher gemessene Temperatur bzw. Temperaturdifferenz, bei deren Erreichen der Regelbereich des Ventils neu festgelegt wird.

Die Druckschrift WO 98/25086 A1 offenbart eine Regelvorrichtung für ein HVAC-System mit einem Ventil, das auf eine Eingabe aus einem Sensor reagiert, um die Strömung eines Fluids durch das Ventil in Abhängigkeit von Bedingungen in der Messumgebung zu beschränken oder zu ermöglichen. Vorgesehen sind weiterhin einen Ventil-Steuergerät sowie ein Durchflussmesser. Der Durchflussmesser ist im Ventilkörper angeordnet und das Ventil-Steuergerät ist mit einer maximalen Durchflussmenge durch das Ventil programmiert. Der Durchfluss durch das Ventil wird von dem Ventil-Steuergerät auf den programmierten Maximalwert begrenzt.

Aus der Druckschrift DE 35 33 160 A1 schliesslich ist eine Steueranordnung für eine an ein Fernheizungssystem angeschlossene Abnehmerzentrale bekannt, wobei an die Abnehmer zentrale eine Messeinrichtung, bestehend aus einem Strömungsmesser, der die Strömung von Fernheizungswasser durch die Abnehmerzentrale misst, Temperaturgeber zum Messen der Vorlauf- und Rücklauftemperatur des Fernheizungswassers und ein Integriergerät zum Be rechnen und Integrieren von verbrauchter Wärmeenergie anhand der gemessenen Strömungs- und Temperaturwerte, sowie ein variables, strömungsregelndes Ventil zum Regeln der Strömung von Fernheizungswasser durch die Abnehmerzentrale angeschlossen sind. Weiterhin ist eine Strömungs- und/oder Energiebegrenzungseinheit vorgesehen, die ein Abtastglied, das an den Strömungsmesser und/oder das Integriergerät angeschlossen ist, um die Strömung von Fernheizungswasser durch die Abnehmerzentrale und/oder die dem Fernheizungssystem entnommene Energie abzutasten, ein Vergleichsglied, das den Wert der Strömung und/oder der entnommenen Energie mit einem dafür vorbestimmten Höchstwert vergleicht und ein Steuerglied aufweist, das an das Strömungsregelungsventil angeschlossen ist und das, wenn die Strömung und/oder die entnommene Energie den genannten vorbestimmten Höchstwert überschreitet, weil z.B. die Wärmeerzeugungsanlage des Fernheizungssystems den Energiebedarf sämtlicher an das Fernheizungssystem angeschlossener Abnehmer nicht deckt, die Strömung und/oder die Energie mittels Reduzierung der Strömung durch das Strömungsregelungsventil auf den genannten Höchstwert reduziert.

Allen diesen bekannten Lösungen ist gemeinsam, dass die verwendeten Grenzwerte festgelegt werden müssen, ohne dass man die Eigenheiten des jeweiligen Energieabnehmers beziehungsweise Sekundärkreises kennt. Ein weiterer Nachteil ist, dass Veränderungen im System, welche die eingestellten Grenzwerte beeinflussen sollten, nicht erkannt und damit nicht berücksichtigt werden können.

DARSTELLUNG DER ERFINDUNG

Es ist daher eine Aufgabe der Erfindung, ein gattungsgemässes Verfahren anzugeben, welches die Nachteile bekannter Verfahren vermeidet und sich insbesondere dadurch auszeichnet, dass die Regelung sich adaptiv auf die tatsächlichen Eigenschaften des jeweiligen Energieabnehmers einstellt und auch nach längerem Betrieb eintretende Veränderungen, insbesondere Verschlechterungen, diese Eigenschaften erkennen und berücksichtigen kann.

Es ist weiterhin eine Aufgabe der Erfindung, eine HVAC-Anlage zur Durchführung des erfindungsgemässen Verfahrens anzugeben.

Diese und andere Aufgaben werden durch die Merkmale der Ansprüche 1 und 11 gelöst.

Beim erfindungsgemässen Verfahren zum Betreiben und/oder Überwachen einer HVAC-Anlage wird wenigstens ein Energieabnehmer von einem in einem Primärkreislauf zirkulierenden Medium durchströmt, welches mit einem Volumenstrom durch eine Vorlaufleitung mit einer Vorlauftemperatur in den Energieabnehmer eintritt und durch eine Rücklaufleitung mit einer Rücklauftemperatur den Energieabnehmer verlässt und dabei in einem Energiefluss Wärmeenergie oder Kälteenergie an den Energieabnehmer abgibt. Das Verfahren zeichnet sich dadurch aus, dass in einem ersten Schritt für den betreffenden Energieabnehmer die Abhängigkeit des Energieflusses und/oder der Temperaturdifferenz $\Delta T$ zwischen Vorlauftemperatur und Rücklauftemperatur vom Volumenstrom empirisch ermittelt wird, und dass in einem zweiten Schritt die HVAC-Anlage nach Massgabe der ermittelten Abhängigkeit bzw. Abhängigkeiten verändert und/oder betrieben wird. Das im Primärkreislauf zirkulierende Medium kann insbesondere Wasser sein. Der Energieabnehmer kann die abgenommene Energie beispielsweise auf Luft oder Wasser übertragen, um insbesondere Räume zu kühlen oder zu heizen.

Eine Veränderung der HVAC-Anlage kann dann notwendig sein, wenn die empirisch ermittelten Daten ergeben, dass die Anlage nicht richtig dimensioniert ist oder von den vorgegebenen Eigenschaften signifikant abweicht. So kann es beispielsweise notwendig sein, den eingesetzten Wärmetauscher durch einen anders dimensionierten Wärmetauscher zu ersetzen oder andere Änderungen an der Anlage vorzunehmen. Eine Änderung im Betrieb könnte darin bestehen, bestimmte vorgegebene Grenzwerte für Volumenstrom, Energiefluss oder Temperaturen, die für die Regelung wichtig sind, zu verändern.

Insbesondere wird zur empirischen Ermittlung der Abhängigkeit des Energieflusses und/oder der Temperaturdifferenz $\Delta T$ zwischen Vorlauftemperatur und Rücklauftemperatur vom Volumenstrom bei laufender Anlage über einen ausreichend langen Zeitraum der Volumenstrom und die Temperaturdifferenz $\Delta T$ zwischen Vorlauftemperatur und Rücklauftemperatur zu verschiedenen Zeitpunkten gleichzeitig gemessen und ggf. für jeden dieser Zeitpunkte aus den zugehörigen Messwerten der zugehörige Energiefluss bestimmt und dem jeweiligen Volumenstrom zugeordnet wird. Die verschiedenen Messpunkte ergeben dann ein Diagramm mit einer kurvenartigen Punkteverteilung, aus dem die verschiedenen regelungstechnischen und anlagentechnischen Schlussfolgerungen gezogen werden können.

Eine Ausgestaltung des erfindungsgemässen Verfahrens zeichnet sich dadurch aus, dass die Abhängigkeit des Energieflusses vom Volumenstrom empirisch ermittelt wird, und dass auf der Grundlage der ermittelten Abhängigkeit ein oberer Grenzwert des Energieflusses festgelegt wird, der beim Betrieb der HVAC-Anlage nicht überschritten wird. Hierdurch ergeben sich ähnliche Vorteile, wie in der eingangs genannten DE 35 33 160 A1 beschrieben, mit dem Unterschied, dass der Grenzwert dem jeweiligen Abnehmer adaptiv angepasst werden kann und das Gesamtsystem nicht nur beim Neuaufbau, sondern auch nach längerem Betrieb unter optimalen Bedingungen betrieben werden kann.

In einer alternativen Ausgestaltung wird die Abhängigkeit der Temperaturdifferenz $\Delta T$ zwischen Vorlauftemperatur und Rücklauftemperatur vom Volumenstrom empirisch ermittelt wird, und auf der Grundlage der ermittelten Abhängigkeit ein unterer Grenzwert der Temperaturdifferenz $\Delta T$ zwischen Vorlauftemperatur und Rücklauftemperatur festgelegt, der beim Betrieb der HVAC-Anlage nicht unterschritten wird.

Eine weitere Ausgestaltung des Verfahren nach der Erfindung ist dadurch gekennzeichnet, dass die Abhängigkeit des Energieflusses und/oder der Temperaturdifferenz $\Delta T$ zwischen Vorlauftemperatur und Rücklauftemperatur vom Volumenstrom bei einer neu errichteten HVAC-Anlage zu Beginn des Betriebs empirisch ermittelt wird, und dass der weitere Betrieb nach Massgabe der ermittelten Abhängigkeit bzw. Abhängigkeiten erfolgt.

Eine weitere Ausgestaltung des Verfahren nach der Erfindung ist dadurch gekennzeichnet, dass die Abhängigkeit des Energieflusses und/oder der Temperaturdifferenz $\Delta T$ zwischen Vorlauftemperatur und Rücklauftemperatur vom Volumenstrom bei einer neu errichteten HVAC-Anlage zu Beginn des Betriebs empirisch ermittelt wird, und dass die HVAC-Anlage beziehungsweise einzelne Komponenten verändert oder ausgetauscht werden, wenn die empirisch ermittelten Abhängigkeiten dies erforderlich machen.

Gemäss einer anderen Ausgestaltung wird die Abhängigkeit des Energieflusses und/oder der Temperaturdifferenz $\Delta T$ zwischen Vorlauftemperatur und Rücklauftemperatur vom Volumenstrom in längeren zeitlichen Abständen wiederholt empirisch ermittelt, wobei die jeweils erhaltenen Ergebnisse miteinander verglichen werden, um anhand des Vergleichs eine Verschlechterung der Anlage in Funktion oder Wirkung festzustellen.

Hierbei kann es notwendig sein, dass die gemessenen Werte zu Vergleichszwecken, insbesondere mittels eines mathematischen Modells des Energieabnehmers, skaliert werden oder andere, vergleichbare Messungen zum Vergleich herangezogen werden, wenn sich wichtige Betriebsparameter wie z.B. die Vorlauftemperatur in der Zwischenzeit wesentlich geändert haben.

Eine andere Ausgestaltung des erfindungsgemässen Verfahrens ist dadurch gekennzeichnet, dass in der HVAC-Anlage zur Durchführung des Betriebs erste Mittel zur Bestimmung der Temperaturdifferenz $\Delta T$ zwischen Vorlauftemperatur und Rücklauftemperatur sowie zweite Mittel zur Bestimmung des Volumenstroms vorgesehen sind, und dass die ersten und zweiten Mittel zur empirischen Ermittlung der Abhängigkeit des Energieflusses und/oder der Temperaturdifferenz $\Delta T$ zwischen Vorlauftemperatur und Rücklauftemperatur vom Volumenstrom verwendet werden. Hierdurch ist es möglich, bereits vorhandene Messeinrichtungen zu benutzen und auf den Einbau von speziellen zusätzlichen Messeinrichtungen zu verzichten.

Vorzugsweise erfolgt die empirische Ermittlung der Abhängigkeit des Energieflusses und/oder der Temperaturdifferenz $\Delta T$ zwischen Vorlauftemperatur und Rücklauftemperatur vom Volumenstrom während des laufenden Betriebs der HVAC-Anlage. Auf diese Weise kann die Anlage ohne Störung des laufenden Betriebs überwacht werden.

Weiterhin ist es von Vorteil, wenn zur Steuerung bzw. Regelung des Volumenstroms im Primärkreislauf ein Regelventil verwendet wird, und wenn aus dem gemessenen Volumenstrom nach Massgabe der Kennlinien des Regelventils und der Ventilstellung die am Regelventil auftretende Druckdifferenz ermittelt und ggf. zu Regelungs- und/oder Überwachungszwecken verwendet wird.

Die erfindungsgemässe HVAC-Anlage zur Durchführung des Verfahrens umfasst einen Primärkreislauf, der von einem Energie transportierenden Medium durchströmt wird, sowie wenigstens einen Energieabnehmer, welcher über einen Vorlaufleitung und eine Rücklaufleitung an den Primärkreislauf angeschlossen ist, wobei erste Mittel zur Bestimmung der Temperaturdifferenz $\Delta T$ zwischen Vorlauftemperatur und Rücklauftemperatur am Energieabnehmer sowie zweite Mittel zur Bestimmung des Volumenstroms durch den Energieabnehmer vorgesehen sind. Sie ist dadurch gekennzeichnet, dass dritte Mittel mit dem ersten und zweiten Mitteln verbunden sind, welche dritten Mittel zu verschiedenen Zeitpunkten gleichzeitig von den ersten und zweiten Mitteln abgegebene Messwerte aufnehmen und abspeichern.

Vorzugsweise umfassen die dritten Mittel einen Datenlogger, der die einander zugeordneten Messwerte aufnimmt und für die weitere Verwendung abspeichert.

Die dritten Mittel sind dabei zur Berechnung und Zuordnung des Energieflusses aus den bzw. zu den von den ersten und zweiten Mitteln abgegebenen Messwerten ausgebildet.

Eine Ausgestaltung der HVAC-Anlage nach der Erfindung ist dadurch gekennzeichnet, dass die HVAC-Anlage eine Steuerung umfasst, welche über ein Regelventil den Volumenstrom durch den Energieabnehmer steuert bzw. regelt, und in welche Grenzwerte für den Energiefluss und/oder die Temperaturdifferenz $\Delta T$ zwischen Vorlauftemperatur und Rücklauftemperatur eingebbar sind.

Vorzugsweise ist die Steuerung mit den ersten und zweiten Mitteln verbunden.

Eine andere Ausgestaltung der HVAC-Anlage ist dadurch gekennzeichnet, dass die ersten Mittel einen ersten Temperatursensor zur Messung der Vorlauftemperatur und einen zweiten Temperatursensor zur Messung der Rücklauftemperatur aufweisen, und dass die zweiten Mittel einen in der Vorlaufleitung oder Rücklaufleitung des Energieabnehmers angeordneten Durchflussmesser umfassen.

Gemäss einer weiteren Ausgestaltung der HVAC-Anlage umfasst der Energieabnehmer einem Wärmetauscher, über den Energie an einen Sekundärkreis abgegeben wird.

KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1    in einem Ausschnitt ein vereinfachtes Schema einer HVAC-Anlage gemäss einem Ausführungsbeispiel der Erfindung;

Fig. 2    die über etwa einen Tag gemessenen Verläufe des Volumenstromes $\varphi$ und der Temperaturdifferenz $\Delta T$ zwischen Vorlauftemperatur und Rücklauftemperatur in einer realen HVAC-Anlage;

Fig. 3    die aus den Verläufen in Fig. 2 im Sinne der Erfindung ermittelten Wertepaare $E_i(\varphi_i)$ und $\Delta T_i(\varphi_i)$, die jeweils einen charakteristischen Kurvenverlauf ergeben;

Fig. 4    einen aus der Darstellung der Fig. 3 abstrahierten Kurvenverlauf $E(\varphi)$ mit einem eingetragenen Grenzwert $E_{max}$; und

Fig. 5    die schematische Darstellung eines über eine längere Betriebsdauer z.B. durch Degradation der Anlage verursachte Veränderung des Kurvenverlauf $E(\varphi)$.

WEGE ZUR AUSFÜHRUNG DER ERFINDUNG

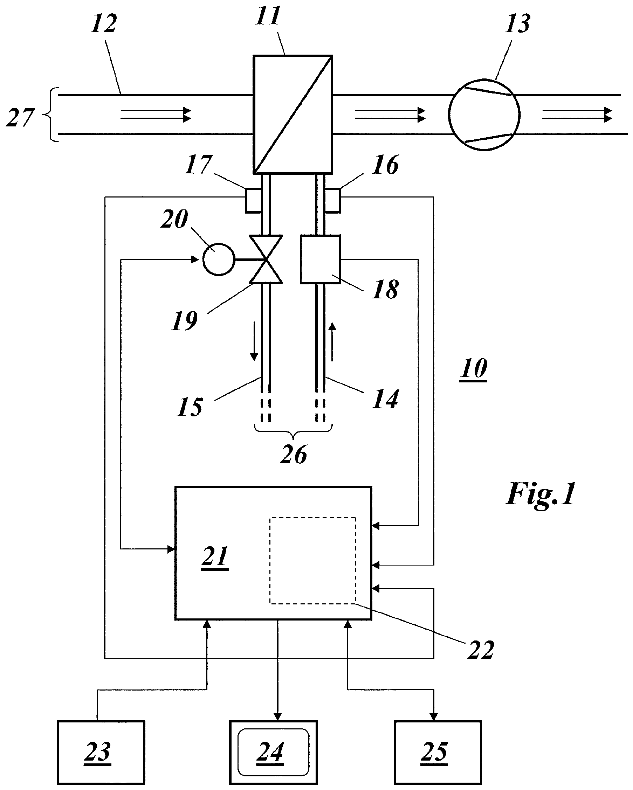

In Fig. 1 ist in einem Ausschnitt ein vereinfachtes Schema einer HVAC-Anlage gemäss einem Ausführungsbeispiel der Erfindung wiedergegeben. Die HVAC-Anlage 10 der Fig. 1 umfasst wenigstens einen Energieabnehmer in Form eines Wasser/Luft-Wärmetauschers 11, der auf der Sekundärseite von Luft durchströmt wird, die in einem Luftkanal 12 von einem Ventilator oder Gebläse 13 herangeführt wird. Auf der Primärseite ist der Wärmetauscher beziehungsweise Wärmeübertrager 11 über eine Vorlaufleitung 14 und eine Rücklaufleitung 15 mit einem Primärkreislauf 26 verbunden, über den aus einer nicht dargestellten zentralen Wärme- oder Kältequelle ein Energie transportierendes Medium, insbesondere Wasser, dem Wärmetauscher 11 Wärme- oder Kälteenergie zuführt. Das Medium tritt über die Vorlaufleitung 14 mit einer Vorlauftemperatur $T_V$ in den Wärmetauscher 11 ein und mit einer Rücklauftemperatur $T_R$ über die Rücklaufleitung 15 wieder aus dem Wärmetauscher 11 aus.

Zur Bestimmung der Durchflussrate des durch den Wärmetauscher 11 strömenden Mediums ist in der Vorlaufleitung 14 ein Durchflussmesser 18 üblicher Bauart angeordnet. Es versteht sich von selbst, dass der Durchflussmesser auch alternativ in der Rücklaufleitung 15 angeordnet sein kann. Zur Regelung bzw. Steuerung der Durchflussrate ist in der Rücklaufleitung 15 ein Regelventil 19 üblicher Bauart angeordnet, dass über einen ansteuerbaren Antrieb 20 verstellt werden kann.

Zur Messung der Vorlauftemperatur $T_V$ ist in der Vorlaufleitung ein Temperatursensor 16 vorgesehen. Die Vorlauftemperatur $T_V$ kann aber auch an anderer Stelle im Primärkreislauf gemessen werden, da diese Temperatur für den Primärkreis insgesamt und alle Energieabnehmer üblicherweise gleich ist. Die Rücklauftemperatur $T_R$ wird mittels eines weiteren Temperatursensors 17 gemessen, der an der Rücklaufleitung 15 angeordnet ist.

Im Betrieb tritt das Medium mit der Vorlauftemperatur $T_V$ über die Vorlaufleitung in den Wärmetauscher 11 ein, gibt dort Wärme- oder Kälteenergie an die durch den Luftkammer 12 strömenden Luft ab und tritt mit einer von der Vorlauftemperatur $T_V$ abweichenden Rücklauftemperatur $T_R$ wieder aus. Der auf den sekundärseitigen Luftstrom übertragene Energiefluss E ergibt sich nach der eingangs genannten Formel aus dem primärseitigen Volumenstrom $\varphi$ und der Temperaturdifferenz $\Delta T$ zwischen Vorlauftemperatur $T_V$ und Rücklauftemperatur $T_R$. Interessiert nur die Höhe des Energieflusses, gegen die Gleichung der Absolutwert der Temperaturdifferenz $\Delta T$ ein.

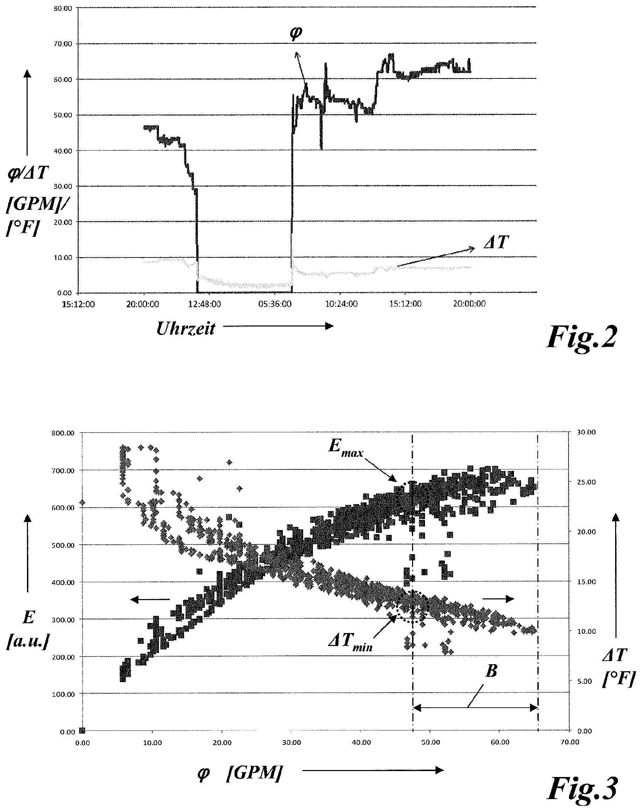

Zur Regelung der Energieübertragung an den Energieabnehmer ist eine Steuerung 21 vorgesehen, welcher die Messwerte aus den Temperatursensoren 16 und 17 und dem Durchflussmesser 18 zugeführt werden. Von der Steuerung 21 wird dann über den Antrieb 20 das Regelventil 19 entsprechend der vorgesehenen Regelcharakteristik gesteuert. Fig. 2 zeigt die in Abhängigkeit von der Uhrzeit über etwa einen Tag gemessenen Verläufe des Volumenstromes $\varphi$ und der Temperaturdifferenz $\Delta T$ zwischen Vorlauftemperatur und Rücklauftemperatur in einer realen HVAC-Anlage im Kühlungsbetrieb. Deutlich zu erkennen ist dort die Nachtabsenkung zwischen Mitternacht (ca. 12:00:00 Uhr) und dem frühen Morgen (ca. 7:00:00 Uhr), wo der Volumenstrom $\varphi$ praktisch verschwindet und die Temperaturdifferenz $\Delta T$ sehr gering ist, und die hohen Werte ab Mittag (ca.13:00:00 Uhr).

Werden bei einem solchen Betrieb mit sich veränderndem Volumenstrom $\varphi$ und sich verändernder Temperaturdifferenz $\Delta T$ zu vielen verschiedenen Zeitpunkten $t_i$ die zugehörigen Wertepaare $\varphi_i$ und $\Delta T_i$ aufgenommen und in einem Diagramm $\Delta T_i(\varphi_i)$ aufgetragen, ergibt sich eine Punkteverteilung, wie sie für die rautenförmigen Punkte in Fig. 3 wiedergegeben ist. Der Volumenstrom ist in Fig. 3 in Gallonen pro Minute (GPM; 1 GPM entspricht 3,785 L/min) angegeben, die Temperaturdifferenz in Grad Fahrenheit (°F).

Aus den Wertepaaren $\varphi_i$ und $\Delta T_i$ kann dann auch der zugehörige Energiefluss $E_i$ berechnet werden. Die entsprechende Punkteverteilung $E_i(\varphi_i)$ mit den quadratischen Punkten ist ebenfalls im Diagramm der Fig. 3 eingetragen.

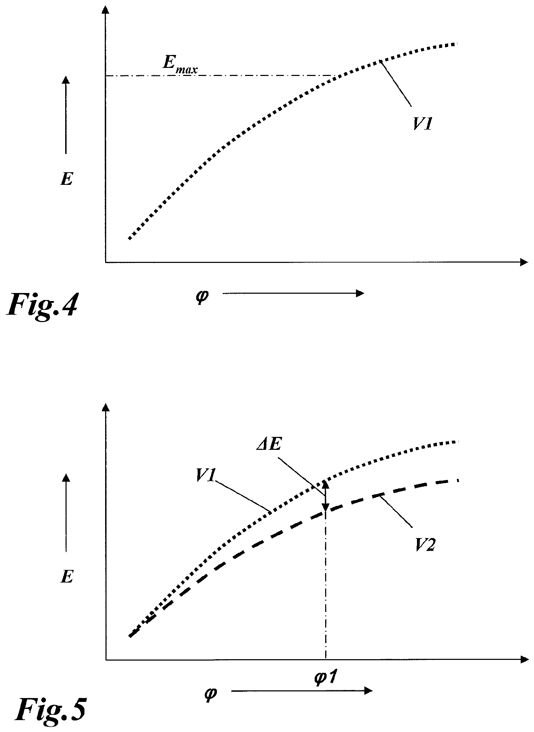

Aus den beiden Punkteverteilungen $\Delta T_i(\varphi_i)$ und $E_i(\varphi_i)$ ergeben sich charakteristische Kurven für den Energieabnehmer (Wärmetauscher 11 plus Sekundärkreislauf), die für den Betrieb der Anlage und die Bewertung und Überwachung der Anlage ausgewertet werden können. Eine solche charakteristische $E(\varphi)$-Kurve mit dem Kurvenverlauf V1 ist in Fig. 4 einzeln als gepunktete Linie wiedergegeben. In ihr spiegelt sich die Punkteverteilung $E_i(\varphi_i)$ aus Fig. 3 wieder. Anhand der Kurve kann nun adaptiv ein maximaler Energieflusswert $E_{max}$ ausgewählt und vorgegeben werden, der dem jeweiligen Energieabnehmer optimal angepasst ist, und der bei der Regelung des zu dieser Kurve gehörigen Energieabnehmers nicht überschritten werden soll. Ein solcher maximaler Energieflusswert $E_{max}$ ergibt sich gemäss Fig. 3 beispielsweise aus der Stelle (oberer gepunkteter Kreis in Fig. 3), an welcher die Punkteverteilung $E_i(\varphi_i)$ einen Bereich B erreicht, der als "Zone der Energieverschwendung" bezeichnet werden kann. Der untere gepunktete Kreis in Fig. 3 markiert den entsprechenden Eintritt der Punkteverteilung $\Delta T_i(\varphi_i)$ in diese Zone (auch hierzu kann eine zu Fig. 4 vergleichbare Kurve erstellt werden), so dass als Grenzwert auch eine minimale Temperaturdifferenz $\Delta T_{min}$ herangezogen werden kann.

Im vorliegenden Fall werden für die Ermittlung der charakteristischen Punkteverteilungen bzw. Kurven $\Delta T_i(\varphi_i)$ und $E_i(\varphi_i)$ die für die Regelung ohnehin vorhandenen Messwertaufnehmer 16-18 eingesetzt. Es ist im Rahmen der Erfindung aber auch denkbar, für diese Ermittlung eingeständige Messwertaufnehmer vorzusehen, so dass diese Ermittlung unabhängig von der übrigen Steuerung/Regelung erfolgen kann.

Im Beispiel der Fig. 1, in dem keine eigenständigen Messwertaufnehmer vorhanden sind, ist innerhalb der Steuerung 21 ein Datenlogger 22 ausgebildet, der durch spezielle Programmierung eines in der Steuerung 21 eingesetzten Mikroprozessors verwirklicht werden kann, aber auch als eigenständige elektronische Einheit vorhanden sein kann. Der Datenlogger 22 nimmt die Messpunkte $\varphi_i$ und $\Delta T_i$ zu vorgegebenen Zeitpunkten $t_i$ paarweise auf und legt sie in einer Speichereinheit ab. Hinzugefügt wird dann der entsprechende berechnete Energieflusswert $E_i$. Die sich ergebenden Punkteverteilungen $\Delta T_i(\varphi_i)$ und $E_i(\varphi_i)$ können dann beispielsweise auf einer Ausgabeeinheit 24 dargestellt werden und stehen somit für den Betreiber der Anlage als Information über den jeweiligen Zustand und die charakteristischen Eigenschaften der Anlage zur Verfügung. Aufgrund der ausgegebenen Information können über eine Eingabeeinheit 23 geeignete Grenzwerte in die Steuerung 21 eingegeben werden. Es ist aber selbstverständlich auch möglich, die adaptive Festlegung der Grenzwerte nach einem vorgegeben Algorithmus in der Steuerung 21 selbst automatisch ablaufen zu lassen.

Neben der adaptiven Festlegung der Grenzwerte $\Delta T_{min}$ und/oder $E_{max}$ kann die empirische Ermittlung der charakteristischen Messpunkteverteilungen bzw. Kurven zur Überwachung der Anlage herangezogen werden: Verschlechtern sich beispielsweise über einen längeren Betriebszeitraum (z.B. durch Verkalkung, Verrosten o.ä.) die Übertragungseigenschaften des Wärmetauschers 11, nimmt bei gleichbleibendem Volumenstrom $\varphi$ der Energiefluss E ab. Wird dann zu einem viel späteren Zeitpunkt (z.B. nach Monaten oder Jahren) eine Messung/Bestimmung der Punkteverteilung $E_i(\varphi_i)$ wiederholt, ergibt sich für die daraus resultierenden Kurvenverläufe das in Fig. 5 dargestellte Bild. Die zu einem späteren Zeitpunkt ermittelte Kurve hat einen Kurvenverlauf V2, der vom ursprünglichen Kurvenverlauf V1 deutlich abweicht, indem für einen bestimmten Wert $\varphi1$ des Volumenstroms ein um $\Delta E$ verringerter Energiefluss E resultiert. Aus einer solchen Veränderung kann auf eine Degradation der Anlage geschlossen werden, die dann im Rahmen einer Wartung/Reparatur gezielt behoben werden kann. Für eine fortlaufende Überwachung ist eine regelmässige Ermittlung der charakteristischen Punkteverteilungen zweckmässig.

Ein direkter Vergleich zweier derartiger Kurvenverläufe V1 und V2 ist jedoch nur möglich, wenn sich die anderen wichtigen Betriebsparameter wie die Vorlauftemperatur $T_V$ und der (Luft-)Durchsatz im Sekundärkreis des Wärmetauschers 11 in der Zwischenzeit nicht oder nur unwesentlich ändern. Ändern sich diese Grössen dagegen deutlich, müssen die gemessenen Werte zu Vergleichszwecken entweder, insbesondere mittels eines mathematischen Modells des Wärmetauschers 11, entsprechend skaliert werden, oder es müssen andere (vergleichbare) Messergebnisse, die bei ähnlichen Betriebsparametern erzielt worden sind, zum Vergleich herangezogen werden.

Die Messung des Volumenstroms $\varphi$ mittels des

Durchflussmessers 18 kann mit Vorteil auch dazu herangezogen werden, um den am Regelventil 19 entstehenden Druckabfall (Druckdifferenz Δp zwischen Ventileingang und Ventilausgang) zu bestimmen und für die Regelung bzw. Überwachung der Anlage nutzbar zu machen. Es entsteht so ein "virtueller Drucksensor", der direkt wirkende Druckmessmittel überflüssig macht. Zur Auswertung wird der Zusammenhang zwischen Volumenstrom φ und Druckdifferenz Δp herangezogen, der sich mit der Gleichung für die Ventilkennlinie

$$\varphi = K_V \sqrt{\Delta p}$$

beschreiben lässt, wobei $K_V$ den von der Ventilstellung (Ventilhub) abhängigen Durchflusskoeffizienten bezeichnet. Indem bei bekannter und in der Steuerung 21 hinterlegter Kennlinienschar für das Regelventil 19 die Stellung des Regelventils 19 zusammen mit dem gemessenen Volumenstrom φ an die Steuerung 21 übermittelt wird, kann dort die zugehörige Druckdifferenz Δp bestimmt bzw. bei Kenntnis des einen Druckwertes der andere Druckwert der Druckdifferenz ermittelt und weiterverwendet werden. Es versteht sich von selbst, dass ein solcher "virtueller Drucksensor" auch mit anderen Ventilen und in anderem Zusammenhang verwirklicht werden kann.

Mit der vorgeschlagenen empirischen Bestimmung der charakteristischen Kurven bzw. Eigenschaften der Anlage ergeben sich folgende Vorteile:

- Wird eine erhebliche Unterfunktion des Wärmetauschers festgestellt, kann eine Sicherheitsschaltung vorgesehen werden.

- Gezielte Grenzwerte für ΔT bzw. E führen zu Einsparungen beim Energieverbrauch der Pumpen und einer Reduktion der Kühlleistung in der Zentrale

- Die Rekommissionierung der Anlage wird erleichtert

- Die Effektivität der Wärmetauscher kann leicht überprüft werden

- Die Anlage kann kontinuierlich angepasst und verbessert werden

- Entwicklungen und Verbesserungen der Anlage können dokumentiert werden

- Die Funktion der Wärmetauscher kann mit den Herstellerdaten verglichen werden

- Durch die ermittelten Daten kann ein Problem schnell erkannt und behoben werden. Aus den Daten kann auch ein notwendiger Austausch des Wärmetauschers abgeleitet werden

- Es ist eine leichte Diagnose möglich für:

a. Fluidstrom in der falschen Richtung
b. Nicht-funktionierende Sensoren
c. Behinderungen der Strömung
d. Niedriges ΔT

Bezugszeichenliste

| 10 | HVAC-Anlage |
|---|---|
| 11 | Wärmetauscher (Wärmeübertrager) |
| 12 | Luftkanal |
| 13 | Ventilator |
| 14 | Vorlaufleitung |
| 15 | Rücklaufleitung |
| 16 | Temperatursensor (Vorlauftemperatur) |
| 17 | Temperatursensor (Rücklauftemperatur) |
| 18 | Durchflussmesser |
| 19 | Regelventil |
| 20 | Antrieb |
| 21 | Steuerung |
| 22 | Datenlogger |
| 23 | Eingabeeinheit |
| 24 | Ausgabeeinheit |
| 25 | Speichereinheit |
| 26 | Primärkreislauf |
| 27 | Sekundärkreis |
| E | Energiefluss |
| ΔT | Temperaturdifferenz |
| φ | Volumenstrom |
| V1,V2 | Kurvenverlauf |

**Patentansprüche**

1.  Verfahren zum Betreiben und/oder Überwachen einer HVAC-Anlage (10), bei welcher wenigstens ein Energieabnehmer (11, 12, 13) von einem in einem Primärkreislauf (26) zirkulierenden Medium durchströmt wird, welches mit einem Volumenstrom (φ) durch eine Vorlaufleitung (14) mit einer Vorlauftemperatur ($T_V$) in den Energieabnehmer (11, 12, 13) eintritt und durch eine Rücklaufleitung (15) mit einer Rücklauftemperatur ($T_R$) den Energieabnehmer (11, 12, 13) verlässt und dabei in einem Energiefluss (E) Wärmeenergie oder Kälteenergie an den Energieabnehmer (11, 12, 13) abgibt, **dadurch gekennzeichnet, dass** in einem ersten Schritt für den betreffenden Energieabnehmer (11, 12, 13) die Abhängigkeit des Energieflusses (E) und/oder der Temperaturdifferenz ΔT zwischen Vorlauftemperatur ($T_V$) und Rücklauftemperatur ($T_R$) vom Volumenstrom (φ) empirisch ermittelt wird, und dass in einem zweiten Schritt die HVAC-Anlage (10) nach Massgabe der ermittelten Abhängigkeit bzw. Abhängigkeiten verändert und/oder betrieben wird, wobei zur empirischen Ermittlung der Abhängigkeit des Energieflusses (E) und/oder der Temperaturdifferenz ΔT zwischen Vorlauftemperatur ($T_V$) und Rücklauftemperatur ($T_R$) vom Volumenstrom ($\varphi$) bei laufender Anlage über einen ausreichend langen Zeitraum der Volumenstrom ($\varphi$) und die Temperaturdifferenz $\Delta T$ zwischen Vorlauftemperatur ($T_V$) und Rücklauftemperatur ($T_R$) zu verschiedenen Zeitpunkten gleichzeitig gemessen werden und ggf. für jeden dieser Zeitpunkte aus den zugehörigen Messwerten der zugehörige Energiefluss (E) bestimmt und dem jeweiligen Volumenstrom ($\varphi$) zugeordnet wird.

2. Verfahren nach Anspruch 1, **dadurch gekennzeichnet, dass** die Abhängigkeit des Energieflusses (E) vom Volumenstrom ($\varphi$) empirisch ermittelt wird, und dass auf der Grundlage der ermittelten Abhängigkeit ein oberer Grenzwert ($E_{max}$) des Energieflusses (E) festgelegt wird, der beim Betrieb der HVAC-Anlage (10) nicht überschritten wird.

3. Verfahren nach Anspruch 1, **dadurch gekennzeichnet, dass** die Abhängigkeit der Temperaturdifferenz $\Delta T$ zwischen Vorlauftemperatur ($T_V$) und Rücklauftemperatur ($T_R$) vom Volumenstrom ($\varphi$) empirisch ermittelt wird, und dass auf der Grundlage der ermittelten Abhängigkeit ein unterer Grenzwert ($\Delta T_{min}$) der Temperaturdifferenz $\Delta T$ zwischen Vorlauftemperatur ($T_V$) und Rücklauftemperatur ($T_R$) festgelegt wird, der beim Betrieb der HVAC-Anlage (10) nicht unterschritten wird.

4. Verfahren nach einem der Ansprüche 1-3, **dadurch gekennzeichnet, dass** die Abhängigkeit des Energieflusses (E) und/oder der Temperaturdifferenz $\Delta T$ zwischen Vorlauftemperatur ($T_V$) und Rücklauftemperatur ($T_R$) vom Volumenstrom ($\varphi$) bei einer neu errichteten HVAC-Anlage (10) zu Beginn des Betriebs empirisch ermittelt wird, und dass der weitere Betrieb nach Massgabe der ermittelten Abhängigkeit bzw. Abhängigkeiten erfolgt.

5. Verfahren nach einem der Ansprüche 1-3, **dadurch gekennzeichnet, dass** die Abhängigkeit des Energieflusses (E) und/oder der Temperaturdifferenz $\Delta T$ zwischen Vorlauftemperatur ($T_V$) und Rücklauftemperatur ($T_R$) vom Volumenstrom ($\varphi$) bei einer neu errichteten HVAC-Anlage (10) zu Beginn des Betriebs empirisch ermittelt wird, und dass die HVAC-Anlage (10) beziehungsweise einzelne Komponenten verändert oder ausgetauscht werden, wenn die empirisch ermittelten Abhängigkeiten dies erforderlich machen.

6. Verfahren nach einem der Ansprüche 1-3, **dadurch gekennzeichnet, dass** die Abhängigkeit des Energieflusses (E) und/oder der Temperaturdifferenz $\Delta T$ zwischen Vorlauftemperatur ($T_V$) und Rücklauftemperatur ($T_R$) vom Volumenstrom ($\varphi$) in längeren zeitlichen Abständen wiederholt empirisch ermittelt wird, und dass die jeweils erhaltenen Ergebnisse miteinander verglichen werden, um anhand des Vergleichs eine Verschlechterung der Anlage in Funktion oder Wirkung festzustellen.

7. Verfahren nach Anspruch 6, **dadurch gekennzeichnet, dass** die gemessenen Werte zu Vergleichszwecken, insbesondere mittels eines mathematischen Modells des Energieabnehmers (11, 12, 13), skaliert werden oder andere, vergleichbare Messungen zum Vergleich herangezogen werden, wenn sich wichtige Betriebsparameter wie z.B. die Vorlauftemperatur ($T_V$) in der Zwischenzeit wesentlich geändert haben.

8. Verfahren nach einem der Ansprüche 1-7, **dadurch gekennzeichnet, dass** in der HVAC-Anlage (10) zur Durchführung des Betriebs erste Mittel (16, 17) zur Bestimmung der Temperaturdifferenz $\Delta T$ zwischen Vorlauftemperatur ($T_V$) und Rücklauftemperatur ($T_R$) sowie zweite Mittel (18) zur Bestimmung des Volumenstroms ($\varphi$) vorgesehen sind, und dass die ersten und zweiten Mittel (16, 17 bzw. 18) zur empirischen Ermittlung der Abhängigkeit des Energieflusses (E) und/oder der Temperaturdifferenz $\Delta T$ zwischen Vorlauftemperatur ($T_V$) und Rücklauftemperatur ($T_R$) vom Volumenstrom ($\varphi$) verwendet werden.

9. Verfahren nach Anspruch 8, **dadurch gekennzeichnet, dass** die empirische Ermittlung der Abhängigkeit des Energieflusses (E) und/oder der Temperaturdifferenz $\Delta T$ zwischen Vorlauftemperatur ($T_V$) und Rücklauftemperatur ($T_R$) vom Volumenstrom ($\varphi$) während des laufenden Betriebs der HVAC-Anlage (10) erfolgt.

10. Verfahren nach einem der Ansprüche 1-9, **dadurch gekennzeichnet, dass** zur Steuerung bzw. Regelung des Volumenstroms ($\varphi$) im Primärkreislauf (26) ein Regelventil (19) verwendet wird, und dass aus dem gemessenen Volumenstrom ($\varphi$) nach Massgabe der Kennlinien des Regelventils (19) und der Ventilstellung die am Regelventil (19) auftretende Druckdifferenz ($\Delta p$) ermittelt und ggf. zu Regelungs- und/oder Überwachungszwecken verwendet wird.

11. HVAC-Anlage (10) zur Durchführung des Verfahrens nach einem der Ansprüche 1-10, welche einen Primärkreislauf (26) umfasst, der von einem Energie transportierenden Medium durchströmt wird, sowie wenigstens einen Energieabnehmer (11, 12, 13), welcher über einen Vorlaufleitung (14) und eine Rücklaufleitung (15) an den Primärkreislauf (26) angeschlossen ist, wobei erste Mittel (16, 17) zur Bestimmung der Temperaturdifferenz $\Delta T$ zwischen Vorlauftemperatur ($T_V$) und Rücklauftemperatur ($T_R$) am Energieabnehmer (11, 12, 13) sowie zweite Mittel (18) zur Bestimmung des Volumenstroms (φ) durch den Energieabnehmer (11, 12, 13) vorgesehen sind, **dadurch gekennzeichnet, dass** dritte Mittel (21, 22) mit dem ersten und zweiten Mitteln (16, 17 bzw. 18) verbunden sind, welche dritten Mittel (21, 22) zu verschiedenen Zeitpunkten gleichzeitig von den ersten und zweiten Mitteln (16, 17 bzw. 18) abgegebene Messwerte aufnehmen und abspeichern.

12. HVAC-Anlage nach Anspruch 11, **dadurch gekennzeichnet, dass** die dritten Mittel (21, 22) einen Datenlogger (22) umfassen.

13. HVAC-Anlage nach Anspruch 11 oder 12, **dadurch gekennzeichnet, dass** die dritten Mittel (21, 22) zur Berechnung und Zuordnung des Energieflusses (E) aus den bzw. zu den von den ersten und zweiten Mitteln (16, 17 bzw. 18) abgegebenen Messwerten ausgebildet sind.

14. HVAC-Anlage nach einem der Ansprüche 11-13, **dadurch gekennzeichnet, dass** die HVAC-Anlage (10) eine Steuerung (21) umfasst, welche über ein Regelventil (19) den Volumenstrom (φ) durch den Energieabnehmer (11, 12, 13) steuert bzw. regelt, und in welche Grenzwerte ($E_{max}$, $\Delta T_{min}$) für den Energiefluss (E) und/oder die Temperaturdifferenz $\Delta T$ zwischen Vorlauftemperatur ($T_V$) und Rücklauftemperatur ($T_R$) eingebbar sind.

15. HVAC-Anlage nach Anspruch 14, **dadurch gekennzeichnet, dass** die Steuerung (21) mit den ersten und zweiten Mitteln (16, 17 bzw. 18) verbunden ist.

16. HVAC-Anlage nach einem der Ansprüche 11-15, **dadurch gekennzeichnet, dass** die ersten Mittel (16, 17) einen ersten Temperatursensor (16) zur Messung der Vorlauftemperatur und einen zweiten Temperatursensor (17) zur Messung der Rücklauftemperatur aufweisen, und dass die zweiten Mittel einen in der Vorlaufleitung (14) oder Rücklaufleitung (15) des Energieabnehmers (11, 12, 13) angeordneten Durchflussmesser (18) umfassen.

17. HVAC-Anlage nach einem der Ansprüche 11-16, **dadurch gekennzeichnet, dass** der Energieabnehmer (11, 12, 13) einem Wärmetauscher (11) umfasst, über den Energie an einen Sekundärkreis (27) abgegeben wird.

## Claims

1. A method for operating and/or monitoring a HVAC system (10), in which a medium circulating in a primary circuit (26) flows through at least one energy consumer (11, 12, 13), which medium enters the energy consumer (11, 12, 13) with a volumetric flow rate (φ) through a supply line (14) at a supply temperature ($T_V$) and exits the energy consumer (11, 12, 13) via a return line (15) at a return temperature ($T_R$), and in so doing releases heat energy or cold energy to the energy consumer (11, 12, 13) in an energy flow (E), **characterized in that** in a first step the dependence of the energy flow (E) and/or of the temperature differential $\Delta T$ between the supply temperature ($T_V$) and the return temperature ($T_R$) on the volumetric flow rate (φ) is determined empirically for the respective energy consumer (11, 12, 13), and that in a second step the HVAC system (10) is changed and/or operated in accordance with the determined dependence and/or dependences, wherein in order to determine empirically the dependence of the energy flow (E) and/or of the temperature differential $\Delta T$ between the supply temperature ($T_V$) and the return temperature ($T_R$) on the volumetric flow rate (φ) the volumetric flow rate (φ) and the temperature differential $\Delta T$ between the supply temperature ($T_V$) and the return temperature ($T_R$) are measured simultaneously at different points in time over a sufficiently long period of time while the system is running, and optionally the associated energy flow (E) for each of these points in time is determined from the associated measurement values and assigned to the respective volumetric flow rate (φ).

2. The method according to claim 1, **characterized in that** the dependence of the energy flow (E) on the volumetric flow rate (φ) is determined empirically, and that an upper limit value ($E_{max}$) of the energy flow (E) is defined on the basis of the determined dependence, which upper limit value is not exceeded while the HVAC system (10) is operating.

3. The method according to claim 1, **characterized in that** the dependence of the temperature differential $\Delta T$ between the supply temperature ($T_V$) and the return temperature ($T_R$) on the volumetric flow rate (φ) is determined empirically, and that a lower limit value ($\Delta T_{min}$) of the temperature differential $\Delta T$ between the supply temperature ($T_V$) and the return temperature ($T_R$) is defined on the basis of the determined dependence, and the temperature differential does not fall below this lower limit value while the HVAC system (10) is operating.

4. The method according to one of claims 1 to 3, **characterized in that** the dependence of the energy flow (E) and/or of the temperature differential $\Delta T$ between the supply temperature ($T_V$) and the return temperature ($T_R$) on the volumetric flow rate (φ) is determined empirically at the start of operation of a newly installed HVAC system (10), and that the subsequent operation takes place in accordance with the determined dependence and/or dependences.

5. The method according to one of claims 1 to 3, **characterized in that** the dependence of the energy flow (E) and/or of the temperature differential $\Delta T$ between the supply temperature ($T_V$) and the return temperature ($T_R$) on the volumetric flow rate ($\varphi$) is determined empirically at the start of operation of a newly installed HVAC system (10), and that the HVAC system (10) or individual components are changed or replaced when such becomes necessary on the basis of the empirically determined dependences.

6. The method according to one of claims 1 to 3, **characterized in that** the dependence of the energy flow (E) and/or of the temperature differential $\Delta T$ between the supply temperature ($T_V$) and the return temperature ($T_R$) on the volumetric flow rate ($\varphi$) is/are determined empirically at repeated, longer time intervals, and that the results obtained in each case are compared with each other to detect a degradation of the system's function or effect by means of the comparison.

7. The method according to claim 6, **characterized in that** the measured values are scaled for comparison purposes, particularly by means of a mathematical model of the energy consumer (11, 12, 13), or other comparable measurements are used for comparison when important operating parameters such as the supply temperature ($T_V$), have changed significantly in the meantime.

8. The method according to one of claims 1 to 7, **characterized in that** first means (16, 17) for determining the temperature differential $\Delta T$ between the supply temperature ($T_V$) and the return temperature ($T_R$) and second means (18) for determining the volumetric flow rate ($\varphi$) are provided in the HVAC system (10) for carrying out the operation, and that the first and second means (16, 17 and/or 18) are used to empirically determine the dependence of the energy flow (E) and/or of the temperature differential $\Delta T$ between the supply temperature ($T_V$) and the return temperature ($T_R$) on the volumetric flow rate ($\varphi$).

9. The method according to claim 8, **characterized in that** the empirical the dependence of the energy flow (E) and/or of the temperature differential $\Delta T$ between the supply temperature ($T_V$) and the return temperature ($T_R$) on the volumetric flow rate ($\varphi$) is/are determined while the HVAC system (10) is in operation.

10. The method according to one of claims 1 to 9, **characterized in that** a control valve (19) is used for open and/or closed loop control of the volumetric flow rate ($\varphi$) in the primary circuit (26), and that the pressure differential ($\Delta p$) occurring at the control valve (19) is determined from the measured volumetric flow rate ($\varphi$) in accordance with the characteristic curves of the control valve (19) and from the valve position, and is used as necessary for controlling and/or monitoring purposes.

11. A HVAC system (10) for carrying out the method according to one of claims 1 to 10, said system comprising a primary circuit (26) through which an energy transporting medium flows, and at least one energy consumer (11, 12, 13) which is connected to the primary circuit (26) via a supply line (14) and a return line (15), wherein first means (16, 17) for determining the temperature differential $\Delta T$ between the supply temperature ($T_V$) and the return temperature ($T_R$) at the energy consumer (11, 12, 13), and second means (18) for determining the volumetric flow rate ($\varphi$) through the energy consumer (11, 12, 13) are provided, **characterized in that** third means (21, 22) are connected to the first and second means (16, 17 and/or 18), which third means (21, 22) capture and store the measurement values that are output simultaneously by the first and second means (16, 17 and/or 18), at various points in time.

12. The HVAC system according to claim 11, **characterized in that** the third means (21, 22) comprise a data logger (22).

13. The HVAC system according to claim 11 or 12, **characterized in that** the third means (21, 22) are configured for calculating and assigning the energy flow (E) from and/or to the measurement values output by first and second means (16, 17 and/or 18).

14. The HVAC system according to one of claims 11 to 13, **characterized in that** the HVAC system (10) comprises a controller (21) which controls and/or regulates the volumetric flow rate ($\varphi$) through the energy consumer (11, 12, 13) by means of a control valve (19), and in which the limit values ($E_{max}$, $\Delta T_{min}$) for the energy flow (E) and/or the temperature differential $\Delta T$ between the supply temperature ($T_V$) and the return temperature ($T_R$) can be entered.

15. The HVAC system according to claim 14, **characterized in that** the controller (21) is connected to the first and second means (16, 17 and/or 18).

16. The HVAC system according to one of claims 11 to 15, **characterized in that** the first means (16, 17) include a first temperature sensor (16) for measuring the supply temperature and a second temperature sensor (17) for measuring the return temperature, and that the second means comprise a flowmeter (18) which is disposed in the supply line (14) or in the return line (15) of the energy consumer (11, 12, 13).

17. The HVAC system according to one of claims 11 to 16, **characterized in that** the energy consumer (11, 12, 13) comprises a heat exchanger (11) by means of which energy is released to a secondary circuit (27).

## Revendications

1. Procédé pour le fonctionnement et/ou la surveillance d'un système CVC (10), dans laquelle au moins un consommateur d'énergie (11, 12, 13) est traversé par un fluide circulant dans un circuit primaire (26), lequel entre avec un débit volumétrique ($\varphi$) dans le consommateur d'énergie (11, 12, 13) à travers une conduite d'amenée (14) avec une température d'amenée ($T_V$) et quitte le consommateur d'énergie (11, 12, 13) à travers une conduite de retour (15) avec une température de retour ($T_R$), tout en transmettant de l'énergie thermique ou frigorifique au consommateur d'énergie (11, 12, 13) dans un flux énergétique (E), **caractérisé en ce qu'**une première étape consiste à déterminer de façon empirique, pour le consommateur d'énergie (11, 12, 13) concerné, la dépendance du flux énergétique (E) et/ou de la différence de température $\Delta T$ entre la température d'amenée ($T_V$) et la température de retour ($T_R$) par rapport au débit volumétrique ($\varphi$), et **en ce que** dans une deuxième étape, le système CVC (10) est modifié et/ou activé conformément à la dépendance ou aux dépendances déterminées, dans lequel, pour déterminer empiriquement la dépendance entre le flux énergétique (E) et/ou la différence de température $\Delta T$ entre la température d'amenée ($T_V$) et la température de retour ($T_R$) par rapport au débit volumétrique ($\varphi$), le débit volumétrique ($\varphi$) et la différence de température $\Delta T$ entre la température d'amenée ($T_V$) et la température de retour ($T_R$) sont mesurés simultanément à différents moments, sur une durée suffisamment longue pendant le fonctionnement du système, et le cas échéant, pour chacun de ces moments, le flux énergétique (E) correspondant est déterminé à partir des valeurs de mesure correspondantes et attribué au débit volumétrique ($\varphi$) respectif.

2. Procédé selon la revendication 1, **caractérisé en ce que** la dépendance du flux énergétique (E) par rapport au débit volumétrique ($\varphi$) est déterminée empiriquement, et **en ce que** sur la base de la dépendance déterminée, une limite supérieure ($E_{max}$) du flux énergétique (E) est fixée, celle-ci ne devant pas être dépassée pendant le fonctionnement du système CVC (10).

3. Procédé selon la revendication 1, **caractérisé en ce que** la dépendance de la différence de température $\Delta T$ entre la température d'amenée ($T_V$) et la température de retour ($T_R$) par rapport au débit volumétrique ($\varphi$) est déterminée empiriquement, et **en ce que** sur la base de la dépendance déterminée, une limite inférieure ($\Delta T_{min}$) de la différence de température $\Delta T$ entre la température d'amenée ($T_V$) et la température de retour ($T_R$) est fixée, celle-ci ne devant pas être dépassée pendant le fonctionnement du système CVC (10).

4. Procédé selon l'une des revendications 1 à 3, **caractérisé en ce que** la dépendance du flux énergétique (E) et/ou de la différence de température $\Delta T$ entre la température d'amenée ($T_V$) et la température de retour ($T_R$) par rapport au débit volumétrique ($\varphi$) est déterminée empiriquement en début de fonctionnement dans un système CVC (10) construit récemment, et **en ce que** le reste du fonctionnement se déroule conformément à la dépendance ou aux dépendances déterminées.

5. Procédé selon l'une des revendications 1 à 3, **caractérisé en ce que** la dépendance du flux énergétique (E) et/ou de la différence de température $\Delta T$ entre la température d'amenée ($T_V$) et la température de retour ($T_R$) par rapport au débit volumétrique ($\varphi$) est déterminée empiriquement en début de fonctionnement dans un système CVC (10) construit récemment, et **en ce que** le système CVC (10) ou le cas échéant des composants individuels sont modifiés ou remplacés, lorsque les dépendances déterminées empiriquement le requièrent.

6. Procédé selon l'une des revendications 1 à 3, **caractérisé en ce que** la dépendance de flux énergétique (E) et/ou de la différence de température $\Delta T$ entre la température d'amenée ($T_V$) et la température de retour ($T_R$) est déterminée empiriquement de façon répétée selon des intervalles prolongés, et **en ce que** les résultats ainsi obtenus sont comparés les uns avec les autres, pour constater à l'aide de la comparaison une détérioration du système quant au fonctionnement ou à l'action.

7. Procédé selon la revendication 6, **caractérisé en ce que** les valeurs mesurées sont mises à l'échelle à des fins de comparaison, en particulier au moyen d'un modèle mathématique du consommateur d'énergie (11, 12, 13), ou alors d'autres mesures comparables seront utilisées pour la comparaison si des paramètres de fonctionnement essentiels tels que la température d'amenée ($T_V$) se sont modifiés entre temps.

8. Procédé selon l'une des revendications 1 à 7, **caractérisé en ce que** dans le système CVC (10), pour le déroulement du fonctionnement, il est prévu des premiers moyens (16, 17) pour la détermination de la différence de température $\Delta T$ entre la température d'amenée ($T_V$) et la température de retour ($T_R$), ainsi que des deuxièmes moyens (18) pour la détermina-

tion du débit volumétrique ($\varphi$), et **en ce que** les premiers et deuxièmes moyens (16, 17 ou 18) sont utilisés pour la détermination empirique de la dépendance du flux énergétique (E) et/ou de la différence de température $\Delta T$ entre la température d'amenée ($T_V$) et la température de retour ($T_R$) par rapport au débit volumétrique ($\varphi$).

9.  Procédé selon la revendication 8, **caractérisé en ce que** la détermination empirique de la dépendance du flux énergétique (E) et/ou de la différence de température $\Delta T$ entre la température d'amenée ($T_V$) et la température de retour ($T_R$) par rapport au débit volumétrique ($\varphi$) est réalisée pendant le fonctionnement du système CVC (10) .

10. Procédé selon l'une des revendications 1 à 9, **caractérisé en ce que** pour commander ou régler le débit volumétrique ($\varphi$), une vanne de réglage (19) est utilisée dans le circuit primaire (26), et **en ce qu'**à partir du débit volumétrique (cp) mesuré, la différence de pression ($\Delta p$) apparaissance au niveau de la vanne de réglage (19) est déterminée selon les caractéristiques de la vanne de réglage (19) et la position de vanne, et utilisée le cas échéant à des fins de réglage et/ou de surveillance.

11. Système CVC (10) pour la mise en oeuvre du procédé selon l'une des revendications 1 à 10, comportant un circuit primaire (26) traversé par un fluide transportant de l'énergie, et au moins un consommateur d'énergie (11, 12, 13) raccordé au circuit primaire (26) par une conduite d'amenée (14) et une conduite de retour (15), dans lequel il est prévu des premiers moyens (16, 17) sur le consommateur d'énergie (11, 12, 13) pour la détermination de la différence de température $\Delta T$ entre une température d'amenée ($T_V$) et une température de retour ($T_R$), ainsi que des deuxièmes moyens (18) pour la détermination du débit volumétrique (cp) à travers le consommateur d'énergie (11, 12, 13), **caractérisé en ce que** des troisièmes moyens (21, 22) sont reliés aux premiers et deuxièmes moyens (16, 17 ou 18), lesdits troisièmes moyens (21, 22) recevant et mémorisant simultanément à différents moments des valeurs de mesure transmises par les premiers et deuxièmes moyens (16, 17 ou 18).

12. Système CVC selon la revendication 11, **caractérisé en ce que** les troisièmes moyens (21, 22) comportant un enregistreur de données (22).

13. Système CVC selon la revendication 11 ou 12, **caractérisé en ce que** les troisièmes moyens (21, 22) sont conçus pour calculer le flux énergétique (E) à partir des valeurs de mesure transmises par les premiers et deuxièmes moyens (16, 17 ou 18) et attribuer celui-ci auxdites valeurs.

14. Système CVC selon l'une des revendications 11 à 13, **caractérisé en ce que** le système CVC (10) comporte une commande (21) commandant ou réglant à l'aide d'une vanne de réglage (19) le débit volumétrique ($\varphi$) à travers le consommateur d'énergie (11, 12, 13), et dans laquelle des valeurs seuil ($E_{max}$, $\Delta T_{min}$) pour le flux énergétique (E) et/ou la différence de température $\Delta T$ entre la température d'amenée ($T_V$) et la température de retour ($T_R$) peuvent être enregistrées.

15. Système CVC selon la revendication 14, **caractérisé en ce que** la commande (21) est reliée aux premiers et deuxièmes moyens (16, 17 ou 18).

16. Système CVC selon l'une des revendications 11 à 15, **caractérisé en ce que** les premiers moyens (16, 17) présentent un premier capteur de température (16) destiné à mesurer la température d'amenée et un deuxième capteur de température (17) destiné à mesurer la température de retour, et **en ce que** les deuxièmes moyens comportent un débitmètre (18) disposé dans la conduite d'amenée (14) ou dans la conduite de retour (15) du consommateur d'énergie (11, 12, 13).

17. Système CVC selon l'une des revendications 11 à 16, **caractérisé en ce que** le consommateur d'énergie (11, 12, 13) comporte un échangeur de chaleur (11) par lequel de l'énergie est fournie à un circuit secondaire (27).

*Fig.1*

**Fig.2**

**Fig.3**

**Fig.4**

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5347825 A
- DE 3425379 A1
- EP 0035085 A1
- DE 2216464
- US 6352106 B1
- WO 9825086 A1
- DE 3533160 A1